# FASCICULE DE BREVET EUROPEEN

(11) **EP 2 007 994 B1**
(45) Date de publication et mention de la délivrance du brevet: **02.06.2010**
(21) Numéro de dépôt: 07731252.8
(22) Date de dépôt: 04.04.2007
(51) Int. Cl.: F16C 27/06

(54) **ARTICULATION HYDRO-ELASTIQUE STRUCTURELLEMENT OPTIMISEE ET SON PROCEDE DE FABRICATION**
STRUKTUROPTIMIERTE HYDROELASTISCHE VERBINDUNG UND HERSTELLUNGSVERFAHREN DAFÜR
STRUCTURALLY OPTIMIZED HYDRO-ELASTIC JOINT AND METHOD OF MAKING IT

(30) Priorité: 14.04.2006 FR 0603364; 01.12.2006 FR 0610543
(43) Date de publication de la demande: 31.12.2008
(73) Titulaire: Société de Technologie Michelin, 63000 Clermont-Ferrand (FR); Michelin Recherche et Technique S.A., 1763 Granges-Paccot (CH)
(72) Inventeur: CRIAUD, Christophe, F-63200 Riom (FR); HONNEUR, Franck, F-63000 Clermont-Ferrand (FR); SOUYRI, Philippe, F-63260 Saint-Genes-du-Retz (FR)
(74) Mandataire: Lasson, Cédric Y. M.
(86) Numéro de dépôt international: PCT/FR2007/000576
(87) Numéro de publication internationale: WO 2007/118994

(56) Documents cités:
- FR-A1- 2 587 430
- FR-A1- 2 830 911

## Description

L'invention concerne, de façon générale, les techniques de maîtrise des vibrations, et en particulier une articulation hydro-élastique conçue pour assembler deux pièces d'une structure de transmission d'efforts, notamment d'un véhicule à moteur, et pour amortir les vibrations transmises de l'une de ces pièces à l'autre.

Plus précisément, l'invention concerne, selon un premier de ses aspects, une articulation hydro-élastique présentant des première et seconde extrémités axiales espacées l'une de l'autre le long d'un axe longitudinal, et comprenant, à distance radiale croissante de cet axe, au moins une armature interne, une armature intermédiaire à fenêtre ou "cage", et un manchon externe, cette articulation comprenant en outre une garniture en matériau élastomère moulée avec au moins un insert de moulage choisi dans l'ensemble comprenant l'armature interne, la cage et le manchon externe, cette garniture formant au moins partiellement une paroi pour au moins deux chambres de fluide hydraulique communiquant l'une avec l'autre à travers au moins un canal.

Une articulation hydro-élastique de ce type est notamment décrite dans le document de brevet FR 2 830 911, d'autres exemples d'articulations étant donnés dans les documents de brevets US 4 971 456, FR 2 853 379, et EP 0 499 996.

Traditionnellement, les chambres de ces articulations sont définies par des espaces radiaux rentrants, creusés entre les bras de la cage.

Corrélativement, la fabrication de ces articulations requiert l'emploi de moules à tiroirs, qui présentent l'inconvénient d'être coûteux, encombrants et d'utilisation relativement complexe.

L'invention repose sur une remise en cause du caractère présumé incontournable de la structure standard des articulations hydro-élastiques, et des inconvénients liés à cette structure.

Pour surmonter ces derniers, l'articulation de l'invention, par ailleurs conforme à la définition générique qu'en donne le préambule ci-dessus, est essentiellement caractérisée en ce qu'elle comprend en outre des moyens d'obturation, en ce que l'ensemble formé par la garniture et chaque insert présente une réserve de moulage au moins essentiellement axiale, et en ce que chaque chambre et chaque canal sont définis à l'intérieur de la réserve de moulage et sont obturés ou délimités, au moins suivant une direction axiale, par les moyens d'obturation.

Selon le mode de réalisation préféré de l'invention, la réserve de moulage et les moyens d'obturation délimitent ensemble, dans des zones angulaires décalées l'une de l'autre autour de l'axe longitudinal et de manière alternée, au moins deux espaces libres de volumes supérieurs et deux espaces libres de volumes inférieurs, chaque espace libre de volume supérieur hébergeant au moins une desdites chambres, et au moins un espace libre de volume inférieur hébergeant ledit canal.

Pour ce faire, il est possible de prévoir que la réserve de moulage présente, à la première extrémité axiale de l'articulation, une ouverture qui est obturée axialement par les moyens d'obturation, cette ouverture étant par exemple annulaire.

En revanche, la seconde extrémité axiale que chaque chambre présente à la seconde extrémité axiale de l'articulation peut être obturée axialement par la garniture.

Dans au moins un mode de réalisation possible de l'invention, les moyens d'obturation comprennent une déformation plastique du manchon externe, résultant d'une rétreinte radiale.

Dans d'autres modes de réalisation possibles de l'invention, les moyens d'obturation comprennent par exemple une pièce rapportée, enfoncée axialement dans la réserve de moulage, cette pièce rapportée comprenant au moins un culot obturant axialement l'ouverture de la réserve de moulage.

Il est alors envisageable de prévoir que le culot de la pièce rapportée présente une gorge périphérique dans laquelle est emboîtée la première extrémité axiale de la cage, et que ce culot forme un pont mécanique entre la première extrémité axiale de la cage et une première extrémité de l'armature interne et / ou du manchon externe.

Le culot de la pièce rapportée peut aussi présenter un rebord interne radialement plus proche de l'axe que la première extrémité axiale de la cage et adapté à former une butée de limitation de débattement radial de l'armature interne par rapport au manchon.

Il est encore possible de prévoir que la cage et le manchon ou la cage et l'armature interne soient reliés l'un à l'autre par leurs secondes extrémités axiales respectives et forment ainsi une seule pièce.

Par ailleurs, la garniture peut présenter au moins un clapet de surpression adapté à faire communiquer deux chambres l'une avec l'autre de façon directe en cas de surpression, la pièce rapportée portant une nervure axiale propre à retenir un bord d'une lèvre de ce clapet.

Dans un mode de réalisation avantageux de l'invention, l'un au moins des éléments constitués par l'armature interne, la cage, le manchon, et la pièce rapportée est réalisé dans un matériau polymère, de préférence par moulage.

L'invention concerne encore un procédé de fabrication d'une articulation hydro-élastique présentant des première et seconde extrémités axiales espacées l'une de l'autre le long d'un axe longitudinal, et comprenant, à distance radiale croissante de cet axe, au moins une armature interne, une armature intermédiaire à fenêtre ou "cage", et un manchon externe, cette articulation comprenant en outre une garniture en matériau élastomère moulée avec au moins un insert de moulage choisi dans l'ensemble comprenant l'armature interne, la cage et le manchon externe, cette garniture formant au moins partiellement une paroi pour au moins deux chambres de fluide hydraulique, ce procédé étant caractérisé en ce qu'il comprend une opération consistant à mouler en une opération la garniture sur la cage et sur le manchon externe et / ou sur l'armature interne.

Dans ce cas, l'opération de démoulage peut être réalisée par éloignement relatif, suivant l'axe longitudinal, du moule et de l'ensemble formé par la garniture et chaque insert, éventuellement accompagné d'une rotation autour de cet axe et / ou d'une déformation élastique de la garniture.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en coupe axiale d'une articulation conforme à un premier mode de réalisation possible de l'invention;
- la figure 2 est une vue en coupe transversale de l'articulation illustrée à la figure 1, cette coupe étant réalisée suivant le plan repéré par les flèches II-II de la figure 1;
- la figure 3 est une vue en coupe axiale de l'articulation illustrée à la figure 1, cette coupe étant réalisée suivant le plan repéré par les flèches III-III de la figure 2;
- la figure 4 est une vue en coupe axiale d'une articulation conforme à un deuxième mode de réalisation possible de l'invention;
- la figure 5 est une vue en coupe transversale de l'articulation illustrée à la figure 4, cette coupe étant réalisée.suivant le plan repéré par les flèches V-V de la figure 4;
- la figure 6 est une vue en coupe axiale de l'articulation illustrée à la figure 4, cette coupe étant réalisée suivant le plan repéré par les flèches VI-VI de la figure 5;
- la figure 7 est une vue en perspective éclatée et en coupe partielle d'une articulation conforme à un troisième mode de réalisation possible de l'invention;
- la figure 8 est une vue en perspective d'une pièce unique formant la cage et le manchon externe de l'articulation illustrée à la figure 7, observée du côté de sa première extrémité axiale;
- la figure 9 est une vue en perspective d'une pièce unique formant la cage et le manchon externe de l'articulation illustrée à la figure 7, observée du côté de sa deuxième extrémité axiale;
- la figure 10 est une vue en perspective de la pièce illustrée à la figure 9, coupée suivant un plan axial;
- la figure 11 est une vue en coupe suivant un plan axial de la pièce illustrée à la figure 9;
- la figure 12 est une vue en perspective partiellement écorchée de la garniture et de l'ensemble des inserts qu'elle présente dans le troisième mode de réalisation illustré de l'invention;
- la figure 13 est une vue en perspective de la garniture d'une articulation connue dans l'art antérieur;
- la figure 14 est une vue en coupe suivant un plan axial de la garniture et de l'ensemble des inserts qu'elle présente dans le troisième mode de réalisation illustré de l'invention;
- la figure 15 est une vue en coupe transversale de la garniture et de l'ensemble des inserts qu'elle présente dans le troisième mode de réalisation de l'invention;
- la figure 16 est une vue en perspective de la pièce rapportée, formant distributeur;
- la figure 17 est une vue de dessus du distributeur illustré à la figure 16;
- la figure 18 est une vue agrandie d'un détail de la figure 16;
- la figure 19 est une vue en perspective partiellement éclatée et écorchée d'une articulation conforme à l'invention;
- la figure 20 est une vue en perspective d'une articulation conforme à l'invention;
- la figure 21 est une vue en coupe transversale de l'articulation illustrée à la figure 20;
- la figure 22 est une vue en coupe de l'articulation illustrée à la figure 20, la coupe étant réalisée suivant un premier plan axial;
- la figure 23 est une autre vue en coupe de l'articulation illustrée à la figure 22, la coupe étant réalisée suivant un deuxième plan axial différent du premier;
- la figure 24 est une vue en coupe d'une variante de l'articulation illustrée aux figures 22 et 23;
- la figure 25 est une vue agrandie du détail repéré par la référence XXV sur la figure 24;
- la figure 26 est une vue en coupe axiale d'une articulation conforme à un quatrième mode de réalisation possible de l'invention;
- la figure 27 est une vue en coupe transversale dé l'articulation illustrée à la figure 26, cette coupe étant réalisée suivant le plan repéré par les flèches XXVII-XXVII de la figure 26; et
- la figure 28 est une vue en coupe axiale de l'articulation illustrée à la figure 26, cette coupe étant réalisée suivant le plan repéré par les flèches XXVIII-XXVIII de la figure 27.

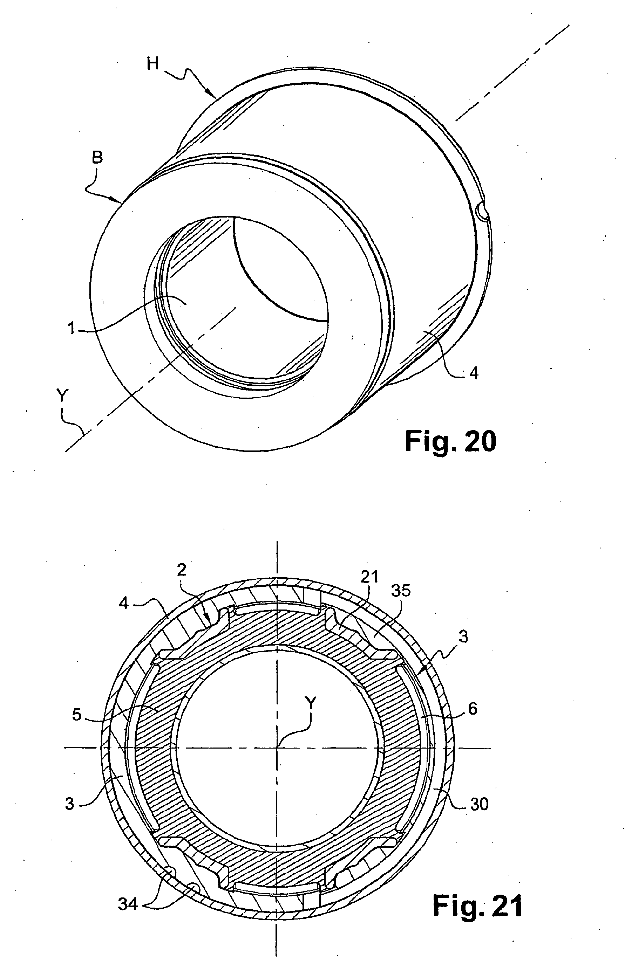

Comme annoncé précédemment, l'invention concerne une articulation hydro-élastique globalement conformée en cylindre creux (figure 20) et présentant des extrémités axiales B et H espacées l'une de l'autre le long d'un axe longitudinal Y et par convention respectivement désignées comme inférieure et supérieure.

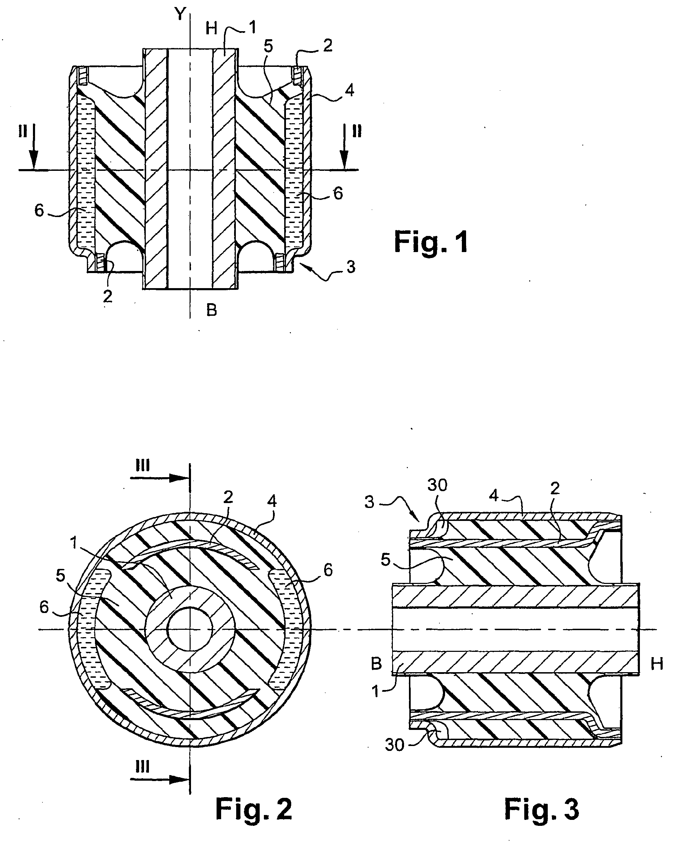

Comme le montrent notamment les figures 1, 4, 7, et 26, cette articulation comprend au moins, à distance radiale croissante de cet axe Y, une armature interne 1, une armature intermédiaire 2 à fenêtre, et un manchon externe 4.

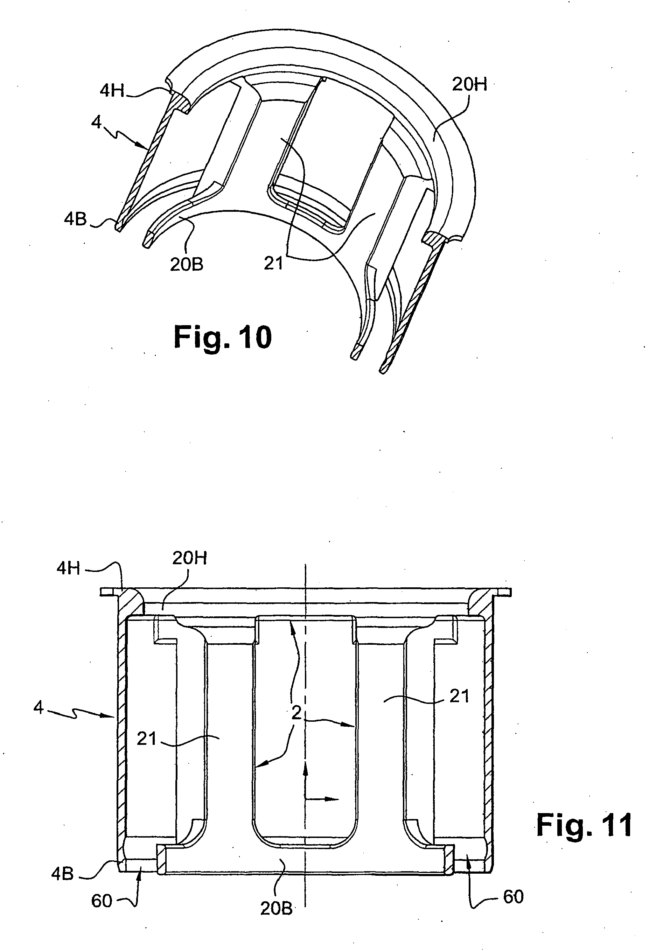

L'armature à fenêtre 2, plus communément appelée "cage", peut être essentiellement formée de deux bagues 20B et 20H reliées par des bras axiaux 21 (figure 11).

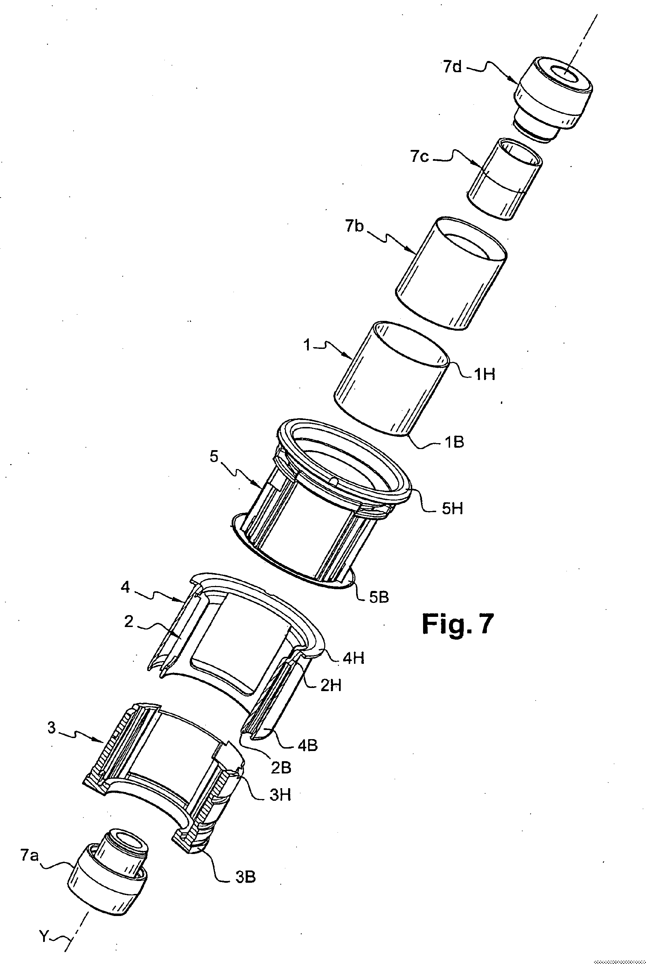

Cette articulation comprend également une garniture 5 en matériau élastomère ainsi, éventuellement, que des pièces additionnelles 7a à 7d (figure 7) qui n'appartiennent pas spécifiquement à l'invention.

La garniture 5 est obtenue par moulage dans un moule où sont également introduits, en tant qu'inserts, un ou plusieurs éléments choisis dans l'ensemble comprenant l'armature interne 1, la cage 2 et le manchon externe 4.

Cette garniture 5 forme au moins partiellement une paroi pour plusieurs chambres 6 de fluide hydraulique, qui communiquent l'une avec l'autre au moins par paires à travers un canal ou plusieurs canaux 30.

Grâce à cet agencement, les mouvements radiaux relatifs entre l'armature interne 1 et le manchon externe 4 provoquent, de façon connue en soi, des variations de volume des différentes chambres, donc une circulation du fluide hydraulique entre les différentes chambres 6 à travers les canaux 30 du distributeur.

Les mouvements radiaux relatifs entre l'armature interne 1 et le manchon externe 4 peuvent ainsi être atténués et filtrés en fréquence grâce à la résistance par effet inertiel qu'offrent les canaux 30 à la circulation du fluide entre les différentes chambres 6.

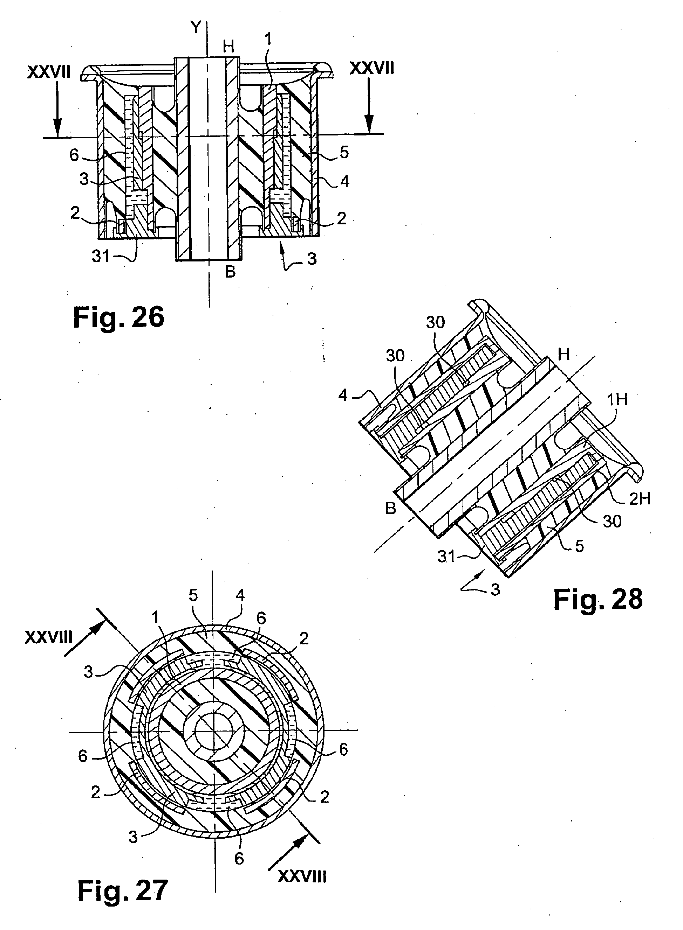

La garniture 5, qui présente une partie interne 51 et une partie périphérique 52, peut notamment relier la cage 2 à l'armature interne 1 (figures 1, 4, 15) ou relier la cage 2 au manchon externe 4 (figure 26).

Dans le premier cas, la partie périphérique 52 de la garniture 5 forme typiquement une paroi intérieure pour les chambres 6, alors que dans le second cas, la partie interne 51 de la garniture 5 forme une paroi radialement extérieure pour les chambres 6.

En plus des éléments précédemment évoqués, l'articulation comprend des moyens d'obturation 3, qui sont susceptibles de revêtir des formes variées.

Par ailleurs, l'ensemble formé par la garniture 5 et chaque insert présente une réserve de moulage au moins essentiellement axiale.

On appelle "réserve de moulage" le volume laissé libre de toute matière dans une opération de moulage, grâce à la présence, dans le moule, d'un noyau qui occupe ce volume.

Par convention, une réserve de moulage "au moins essentiellement axiale" au sens de la présente description est une réserve de moulage qui est strictement axiale ou qui, à défaut de l'être, ne présente que des cavités radiales hélicoïdales ou de dimensions suffisamment faible pour que l'opération de démoulage puisse être pratiquée par éloignement relatif, suivant l'axe longitudinal Y, du moule et de l'ensemble formé par la garniture 5 et chaque insert, éventuellement accompagné d'une rotation autour de cet axe Y et / ou d'une déformation élastique de la garniture 5.

Chaque chambre 6 et chaque canal 30 peuvent ainsi être définis à l'intérieur de la réserve de moulage et sont obturés ou délimités, au moins suivant une direction axiale, par les moyens d'obturation 3.

Chacun des éléments 1 à 5 de l'articulation présente une extrémité axiale inférieure 1B à 5B, et une extrémité axiale supérieure 1H à 5H.

Comme le montrent par paires les figures 1 et 3, 4 et 6, 22 et 23, et 26 et 28, la réserve de moulage et les moyens d'obturation 3 délimitent ensemble des espaces libres de volumes différents dans des zones angulaires respectives décalées l'une de l'autre autour de l'axe longitudinal Y.

Les espaces libres de volume relativement grand, dont chacun héberge une chambre 60, alternent avec les espaces libres de volume relativement petit, dont l'un au moins héberge le canal 30.

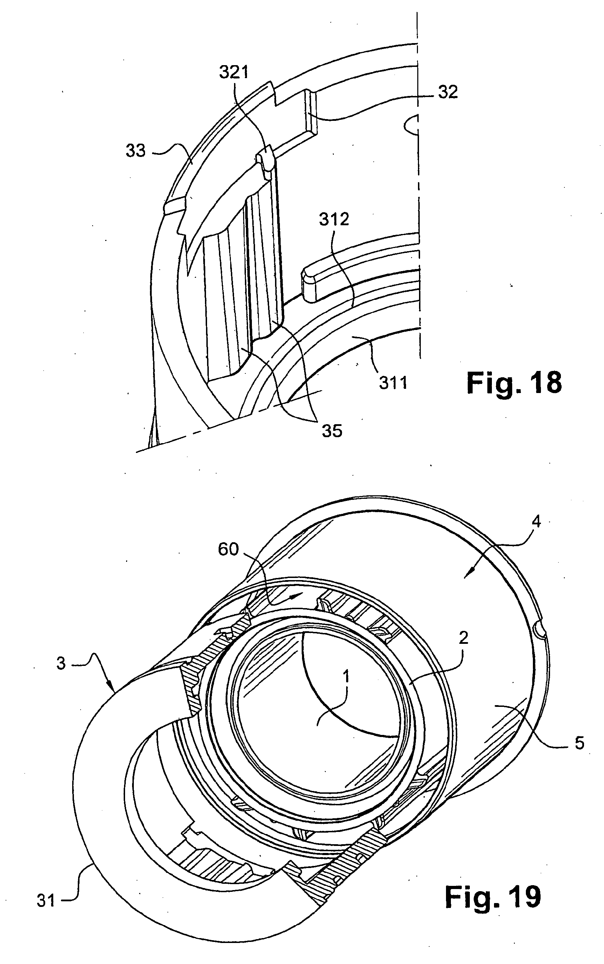

Plus précisément, dans les modes de réalisation comprenant deux chambres 6 (figures 1 à 6), la réserve de moulage et les moyens d'obturation 3 délimitent ensemble deux espaces libres de volumes relativement grand alternant avec deux espaces libres de volume relativement petit, et dans les modes de réalisation comprenant quatre chambres (figures 7 à 12 et 14 à 28), la réserve de moulage et les moyens d'obturation 3 délimitent ensemble quatre espaces libres de volume relativement grand alternant avec quatre espaces libres de volume relativement petit.

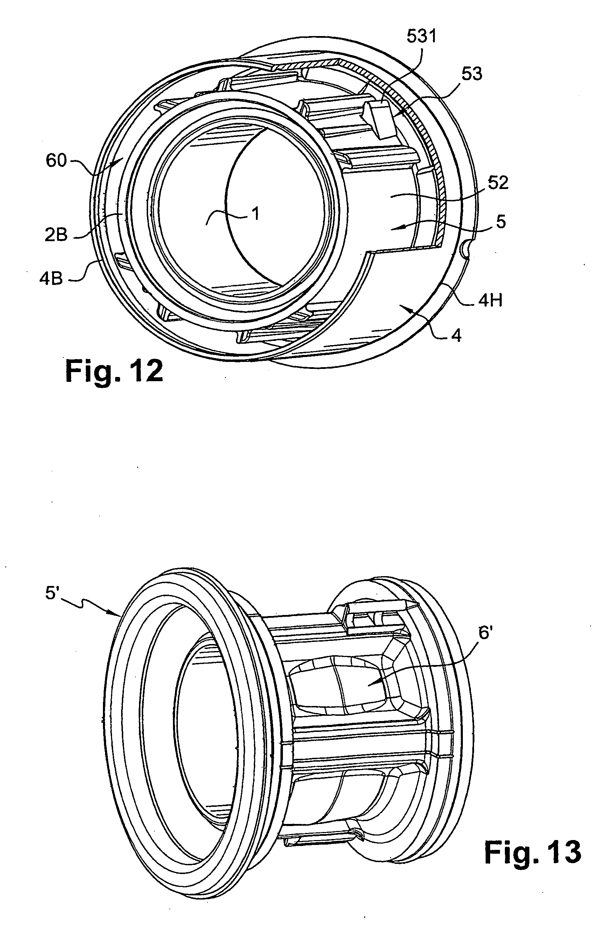

Dans tous les cas, la réserve de moulage présente, à l'extrémité axiale inférieure B de l'articulation, au moins une ouverture 60 (voir par exemple figure 12) qui permet le démoulage de la garniture 5 et de l'ensemble de ses inserts le long de l'axe Y, et qui est obturée axialement par les moyens d'obturation 3.

Cette structure se distingue ainsi fondamentalement de la structure d'une articulation connue telle qu'illustrée à la figure 13, dans laquelle la garniture 5' définit des chambres 6' dont chacune est bordée à la fois axialement et radialement.

Comme le montrent notamment les figures 1, 4, 14, et 26, l'ouverture 60 laissée par la réserve de moulage avant la mise en place des moyens d'obturation 3 peut avantageusement être annulaire.

Par ailleurs, comme le montrent ces mêmes figures, l'extrémité axiale supérieure 6H de chaque chambre 6 est de préférence obturée axialement par la garniture 5.

Dans le mode de réalisation illustré aux figures 1 à 3, les moyens d'obturation 3 sont en fait constitués par une déformation plastique du manchon externe; résultant d'une rétreinte radiale.

D'autre part, les espaces libres de volume supérieur, qui forment les chambres 6 (figure 1), sont obtenus en prévoyant que la garniture 5, dans les zones angulaires correspondantes, ne s'étende axialement que sur une faible distance et à proximité seulement de l'extrémité supérieure H de l'articulation, alors que les espaces libres de volume inférieur, qui forment les canaux 30 (figure 3), sont obtenus en prévoyant que la garniture 5, dans les zones angulaires correspondantes, s'étende axialement sur une distance plus importante, depuis l'extrémité supérieure H jusqu'à proximité de l'extrémité inférieure B de l'articulation.

Les autres figures, à l'exception de la figure 13 qui ne concerne pas l'invention, illustrent des modes de réalisation dans lesquels les moyens d'obturation sont constitués par une pièce rapportée 3.

Cette pièce rapportée est enfoncée axialement dans la réserve de moulage et comprend un culot 31 qui obture axialement l'ouverture 60 de cette réserve de moulage.

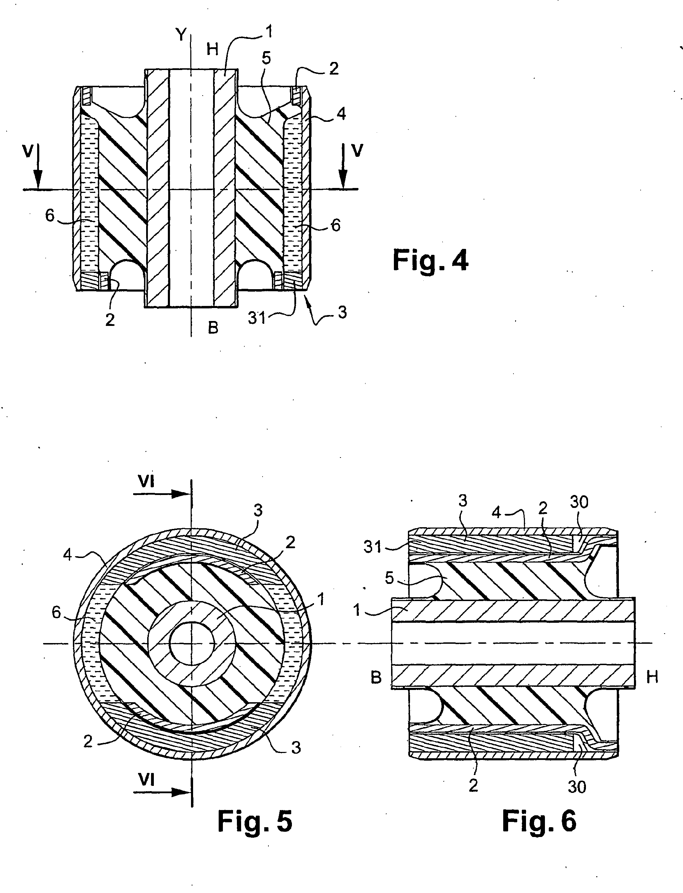

Dans le mode de réalisation illustré aux figures 4 à 6, les espaces libres de volume supérieur, qui forment les chambres 6 (figure 4), sont obtenus en prévoyant que la pièce rapportée 3, dans les zones angulaires correspondantes, ne s'étende axialement que sur une faible distance et à proximité seulement de l'extrémité inférieure B de l'articulation, alors que les espaces libres de volume inférieur, qui forment les canaux 30 (figure 6), sont obtenus en prévoyant que la pièce rapportée 3, dans les zones angulaires correspondantes, s'étende axialement sur une distance plus importante, depuis l'extrémité inférieure B jusqu'à proximité de l'extrémité supérieure H de l'articulation.

Les figures 7 à 12 et 14 à 25 illustrent un troisième mode de réalisation pour une articulation conforme à l'invention, dotée de caractéristiques plus élaborées qui sont détaillées ci-après.

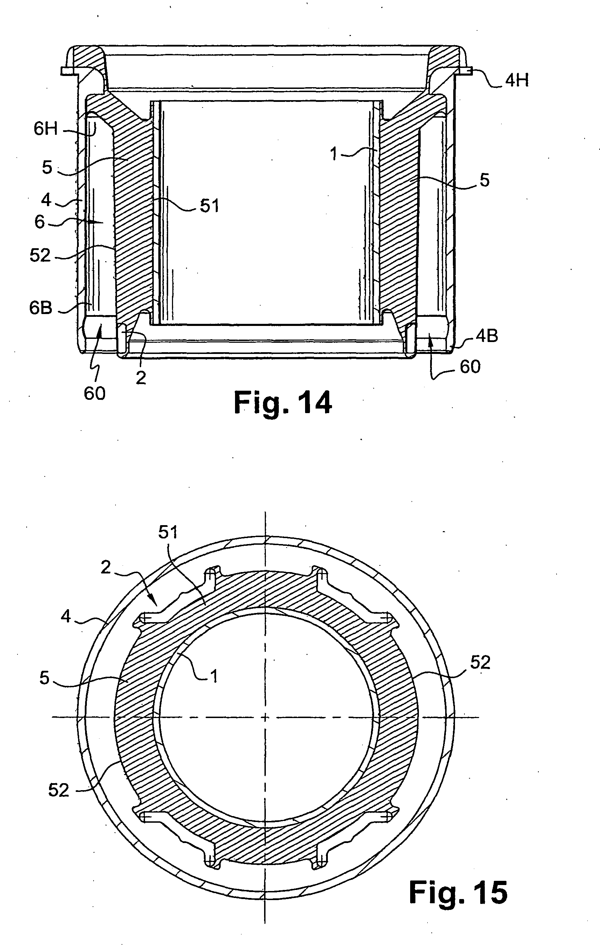

Dans ce mode de réalisation, et comme le montrent le mieux les figures 14, 15, 16, 22, et 23, la fragmentation du volume total, initialement occupé par la réserve de moulage, en volumes plus petits constituant les chambres 6 et les canaux 30 est réalisée presque exclusivement par la pièce rapportée 3 qui joue ainsi le rôle de distributeur.

Par ailleurs, pour éviter l'endommagement de cette articulation en cas de choc violent provoquant une surpression excessive du fluide dans l'une des chambres 6, la garniture moulée 5 présente, de façon connue en soi, un ou plusieurs clapets de surpression 53 adaptés à faire communiquer l'une avec l'autre, de façon directe, deux chambres 6 différentes.

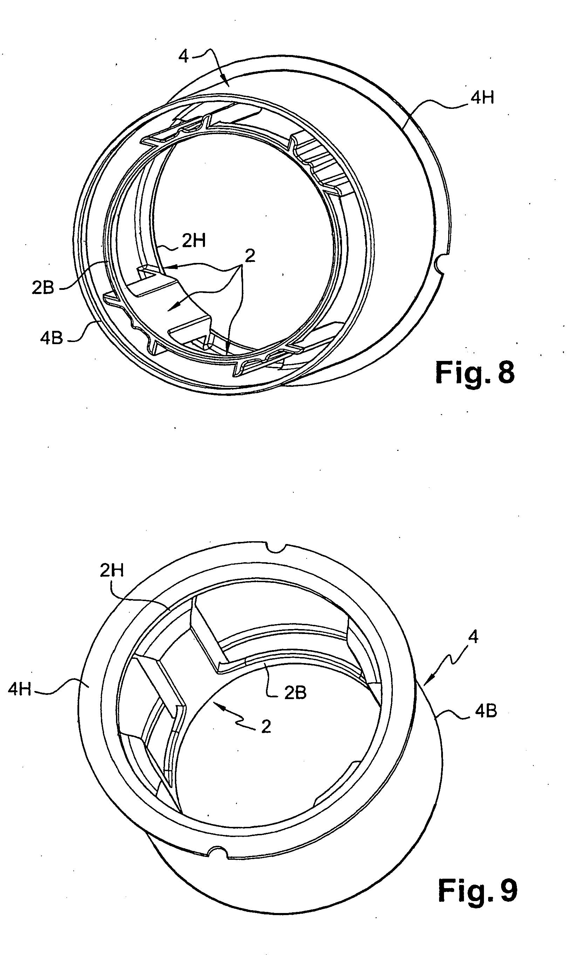

Comme le montrent notamment les figures 8 à 11, la cage 2 et le manchon 4 sont de préférence reliés l'un à l'autre par leurs extrémités axiales supérieures respectives 2H et 4H, de sorte qu'elles ne forment qu'une seule pièce et qu'elles peuvent être fabriquées ensemble, en particulier par moulage.

Plus généralement, la cage 2, le manchon 4, le distributeur 3 et / ou le culot annulaire 31 peuvent avantageusement être réalisés en aluminium ou dans un matériau polymère.

Ces pièces peuvent donc être obtenues par moulage et présenter des formes relativement élaborées leur permettant de remplir aisément de multiples fonctions.

La fabrication de l'articulation peut encore être simplifiée en introduisant le manchon externe 4, en tant qu'insert supplémentaire, dans le moule servant au moulage de la garniture 5 en matériau élastomère.

Le culot 31 de la pièce rapportée 3 prend la forme d'une collerette annulaire faisant partie intégrante de cette pièce 3, cette dernière assurant une fonction de distributeur.

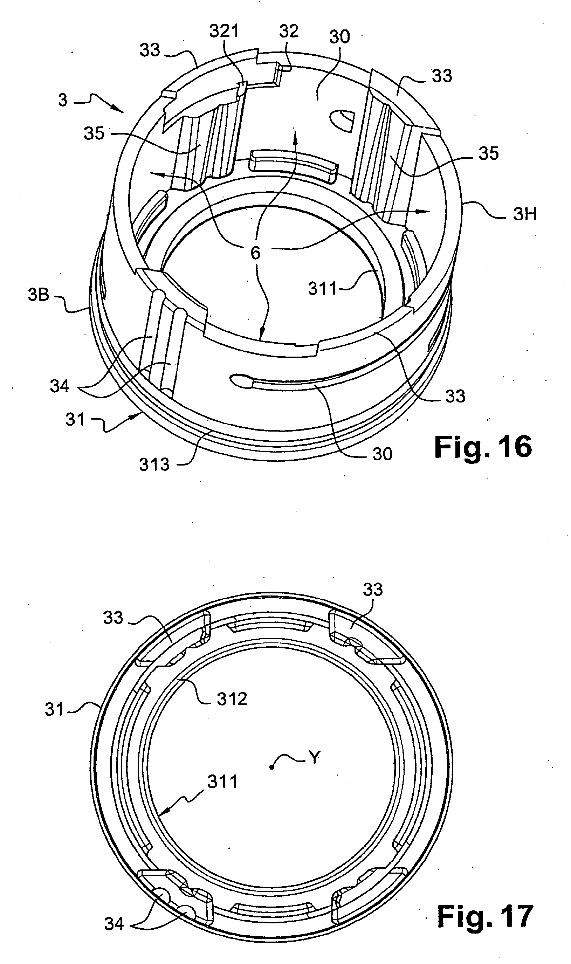

Cette pièce ou ce distributeur 3, plus spécifiquement illustrée aux figures 16 à 18, remplit de multiples fonctions et présente à cet effet une structure relativement élaborée.

Tout d'abord, la collerette 31 de ce distributeur 3 présente un rebord interne 311 disposé à plus grande proximité radiale de l'axe Y que l'extrémité inférieure axiale 2B de la cage 2, ce rebord interne étant destiné à limiter le débattement radial de la pièce 7a liée à l'armature interne 1, et donc à constituer une butée limitant le débattement radial de l'armature interne 1 par rapport au manchon 4.

A son extrémité axiale supérieure 3H, le distributeur 3 présente des plots 33 destinés à venir s'appliquer sur la garniture élastomère 5 pour assurer l'étanchéité entre les chambres 6 de chaque paire de chambres voisines.

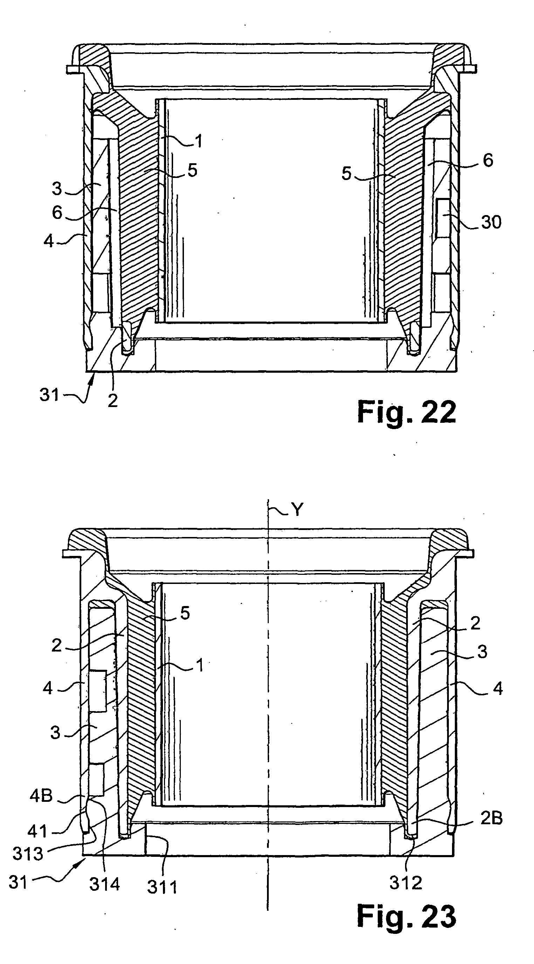

La collerette 31 du distributeur 3 présente par ailleurs une gorge périphérique interne 312 (figure 23) dans laquelle vient s'emboîter l'extrémité axiale inférieure 2B de la cage 2, qui se trouve ainsi rigidement reliée, par le culot de la pièce annulaire rapportée 3 que forme la collerette 31, à l'extrémité axiale inférieure 4B du manchon 4.

Le distributeur 3 présente, sur sa face interne, des bossages 35 parallèles à l'axe Y (à l'angle de dépouille près) et destinés à s'appliquer sur les bras 21 de la cage 2 (figure 21) pour assurer d'une part le calage angulaire du distributeur 3 par rapport à la cage 2 autour de cet axe Y et d'autre part la cohésion radiale de ce distributeur et de la cage vis-à-vis des efforts radiaux exercés entre l'armature interne 1 et le manchon 4.

Pour éviter qu'un clapet de surpression 53 de la garniture moulée 5 ne se trouve accidentellement adhérisé sur la face interne du manchon 4 lors du moulage de cette garniture, et pour garantir la géométrie de ce clapet, chaque clapet 53 est dimensionné pour être séparé par une distance non nulle de la face interne du manchon 4.

Il est alors possible de prévoir que chaque clapet 53 coopère avec le fond d'un lamage 32 creusé dans la face interne du distributeur 3 entre deux chambres voisines, sur la génératrice d'un bossage 35.

En variante, le distributeur peut présenter une fenêtre à la place du lamage, chaque clapet 53 coopérant alors directement avec la face interne du manchon 4 dès que ce clapet a été rapproché de cette face interne par la contrainte radiale qui est appliquée à l'articulation avant son utilisation.

Dans les deux cas, le distributeur 3 porte de préférence une nervure axiale 321 propre à retenir le bord supérieur 531 de la lèvre de ce clapet 53.

La collerette 31 (figure 23) comporte en outre une gorge périphérique externe 313, dans laquelle vient s'encliqueter l'extrémité inférieure 4B du manchon 4, elle-même creusée d'une gorge périphérique interne 41 s'appliquant sur une protubérance 314 de cette collerette 31.

Cet agencement conduit au développement d'une force axiale d'appui de la collerette 31 contre les extrémités respectives 2B et 4B de la cage 2 et du manchon 4, cette force d'appui pouvant être mise à profit pour assurer la compression axiale de joints toriques disposés d'une part entre l'extrémité 2B de la cage 2 et la collerette 31 et d'autre part entre l'extrémité 4B du manchon 4 et cette même collerette 31.

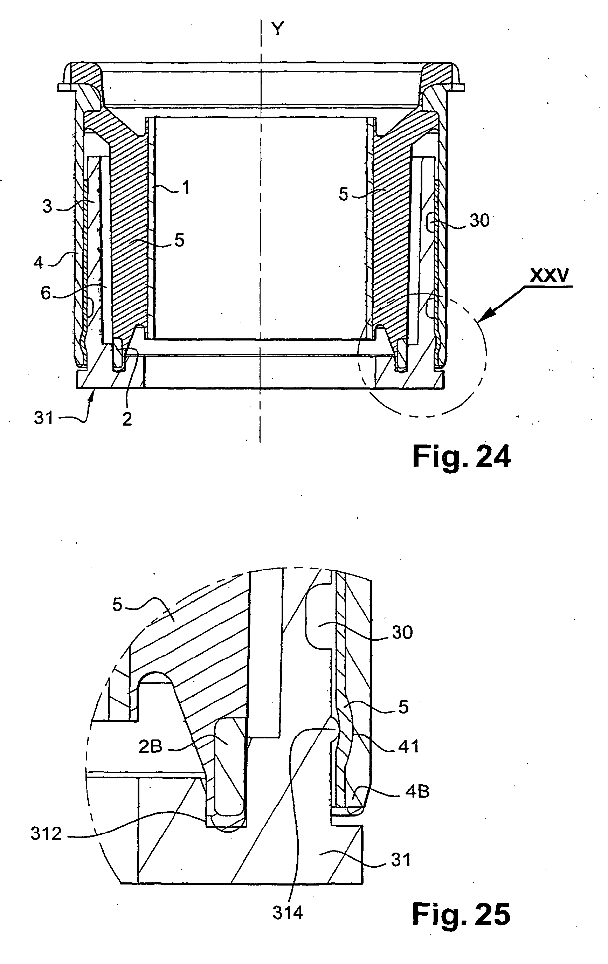

Le joint torique formé entre l'extrémité 2B de la cage 2 et la collerette 31, à peine visible sur les figures 22 et 23, est disposé au fond de la gorge périphérique interne 312 de la collerette 31 et bien visible sur la figure 25 qui illustre une variante de réalisation de l'étanchéité entre l'extrémité 4B du manchon 4 et la collerette 31.

Selon cette variante, une fine couche de garniture élastomère 5 est déposée sur la face latérale interne du manchon 4 et notamment au fond de la gorge périphérique interne 41 de ce manchon, l'étanchéité étant réalisée par compression radiale de cette couche de garniture 5 entre la protubérance 314, en l'occurrence arrondie, de la collerette 31 et le fond de la gorge 41 du manchon 4.

Enfin, la face externe du distributeur 3 est creusée de canaux d'évacuation 34 par exemple formés au dos des bossages 35 et de même direction, et permettant au fluide hydraulique présent en surabondance dans les chambres 6 de s'évacuer de ces dernières lors de l'introduction du distributeur 3 dans l'espace annulaire 60, tout en appliquant éventuellement une légère surpression au fluide restant emprisonné.

Le procédé de fabrication de l'articulation hydro-élastique correspondant notamment à ce mode de réalisation est de préférence mis en oeuvre en fabriquant l'armature interne 1 par exemple sous forme d'une section de tube métallique, en fabriquant en une seule pièce (figures 8 à 11) la cage 2 et la manchon externe 4 par injection d'aluminium ou d'un polymère mécaniquement résistant dans un premier moule, en fabriquant le distributeur 3 (figures 16 à 18) par injection d'aluminium ou d'un polymère mécaniquement résistant dans un deuxième moule, en formant par moulage dans un troisième moule la garniture 5 sur les inserts constitués par l'armature interne 1, la cage 2 et le manchon 4 (figures 14 et 15), en démoulant cette pièce par éloignement relatif, suivant l'axe longitudinal Y, du troisième moule et de la garniture 5 avec ses inserts, en immergeant dans le fluide hydraulique la pièce moulée avec la garniture, et en introduisant le distributeur 3 et sa collerette d'obturation 31 dans l'ouverture annulaire 60 de la pièce moulée avec la garniture, toujours plongée dans le fluide hydraulique.

Les figures 26 à 28 illustrent un quatrième mode de réalisation pour une articulation conforme à l'invention, dans laquelle la pièce rapportée 3 remplit également le rôle de distributeur, au moins en combinaison avec l'armature interne 1.

Dans ce mode de réalisation, l'armature interne 1 et la cage 2 sont reliées l'une à l'autre par leurs extrémités axiales supérieures respectives 1H et 2H (figure 28), de sorte qu'elles ne forment qu'une seule pièce et qu'elles peuvent être fabriquées ensemble, en particulier par moulage.

La pièce rapportée 3, qui forme distributeur, est insérée axialement dans la réserve de moulage entre l'armature interne 1 et la cage 2, chaque chambre 6 ayant ainsi une paroi radialement interne partiellement formée par cette pièce 3 et une paroi radialement externe formée par la garniture 5.

La réserve de moulage est ainsi partagée en quatre chambres 6 qui communiquent entre elles, au moins par paires, par l'intermédiaire de canaux 30 définis entre des épaulements de l'armature interne 1 et des épaulements de la pièce rapportée 3.

## Revendications

1. Articulation hydro-élastique présentant des première et seconde extrémités axiales (B, H) espacées l'une de l'autre le long d'un axe longitudinal (Y), et comprenant, à distance radiale croissante de cet axe, au moins une armature interne (1), une armature intermédiaire (2) à fenêtre ou "cage", et un manchon externe (4), cette articulation comprenant en outre une garniture (5) en matériau élastomère moulée avec au moins un insert de moulage choisi dans l'ensemble comprenant l'armature interne (1), la cage (2) et le manchon externe (4), cette garniture (5) formant au moins partiellement une paroi pour au moins deux chambres (6) de fluide hydraulique communiquant l'une avec l'autre à travers au moins un canal (30), **caractérisée en ce qu'**elle comprend en outre des moyens d'obturation (3), **en ce que** l'ensemble formé par la garniture (5) et chaque insert présente une réserve de moulage au moins essentiellement axiale, et **en ce que** chaque chambre (6) et chaque canal (30) sont définis à l'intérieur de la réserve de moulage et sont obturés ou délimités, au moins suivant une direction axiale, par les moyens d'obturation (3).

2. Articulation hydro-élastique suivant la revendication 1, **caractérisée en ce que** la réserve de moulage et les moyens d'obturation (3) délimitent ensemble, dans des zones angulaires décalées l'une de l'autre autour de l'axe longitudinal (Y) et de manière alternée, au moins deux espaces libres de volumes supérieurs et deux espaces libres de volumes inférieurs, chaque espace libre de volume supérieur hébergeant au moins une desdites chambres (6), et au moins un espace libre de volume inférieur hébergeant ledit canal (30).

3. Articulation hydro-élastique suivant l'une quelconque des revendications 1 et 2, **caractérisée en ce que** la réserve de moulage présente, à la première extrémité axiale (B) de l'articulation, une ouverture (60) obturée axialement par les moyens d'obturation (3).

4. Articulation hydro-élastique suivant la revendication 3, **caractérisée en ce que** ladite ouverture (60) est annulaire.

5. Articulation hydro-élastique suivant l'une quelconque des revendications précédentes, **caractérisée en ce que** chaque chambre (6) présente, à la seconde extrémité axiale (H) de l'articulation, une seconde extrémité axiale (6H) obturée axialement par la garniture (5).

6. Articulation hydro-élastique suivant l'une quelconque des revendications précédentes, **caractérisée en ce que** les moyens d'obturation (3) comprennent une déformation plastique du manchon externe, résultant d'une rétreinte radiale.

7. Articulation hydro-élastique suivant l'une quelconque des revendications précédentes combinée à la revendication 3, **caractérisée en ce que** les moyens d'obturation (3) comprennent une pièce rapportée, enfoncée axialement dans la réserve de moulage, cette pièce rapportée (3) comprenant au moins un culot (31) obturant axialement l'ouverture (60) de la réserve de moulage.

8. Articulation hydro-élastique suivant la revendication 7, **caractérisée en ce que** le culot (31) de la pièce rapportée (3) présente une gorge périphérique (312) dans laquelle est emboîtée la première extrémité axiale (2B) de la cage (2), et **en ce que** ce culot (31) forme un pont mécanique entre la première extrémité axiale (2B) de la cage (2) et une première extrémité (1B, 4B) de l'armature interne (1) et / ou du manchon externe (4).

9. Articulation hydro-élastique suivant l'une quelconque des revendications précédentes combinée à la revendication 7, **caractérisée en ce que** le culot (31) de la pièce rapportée (3) présente un rebord interne (311) radialement plus proche de l'axe (Y) que la première extrémité axiale (2B) de la cage (2) et adapté à former une butée de limitation de débattement radial de l'armature interne (1) par rapport au manchon (4).

10. Articulation hydro-élastique suivant l'une quelconque des revendications précédentes, **caractérisée en ce que** la cage (2) et le manchon (4) ou la cage (2) et l'armature interne (1) sont reliés l'un à l'autre par leurs secondes extrémités axiales respectives (2H, 4H; 2H, 1H) et forment une seule pièce.

11. Articulation hydro-élastique suivant l'une quelconque des revendications précédentes, **caractérisée en ce que** la garniture (5) présente au moins un clapet de suppression (53) adapté à faire communiquer deux chambres (6) l'une avec l'autre de façon directe en cas de surpression, et **en ce que** la pièce rapportée (3) porte une nervure axiale (321) propre à retenir un bord (531) d'une lèvre de ce clapet (53).

12. Articulation hydro-élastique suivant l'une quelconque des revendications précédentes, **caractérisée en ce que** l'un au moins des éléments constitués par l'armature interne (1), la cage (2), le manchon (4), et la pièce rapportée (3) est réalisé dans un matériau polymère, de préférence par moulage.

13. Procédé de fabrication d'une articulation hydro-élastique présentant des première et seconde extrémités axiales (B, H) espacées l'une de l'autre le long d'un axe longitudinal (Y), et comprenant, à distance radiale croissante de cet axe, au moins une armature interne (1), une armature intermédiaire (2) à fenêtre ou "cage", et un manchon externe (4), cette articulation comprenant en outre une garniture (5) en matériau élastomère moulée avec au moins un insert de moulage choisi dans l'ensemble comprenant l'armature interne (1), la cage (2) et le manchon externe (4), cette garniture (5) formant au moins partiellement une paroi pour au moins deux chambres (6) de fluide hydraulique, **caractérisé en ce qu'**il comprend une opération consistant à mouler en une opération la garniture (5) sur la cage (2) et sur le manchon externe (4) et / ou sur l'armature interne (1).

14. Procédé de fabrication selon la revendication 13, **caractérisé en ce que** l'opération de démoulage est réalisée par éloignement relatif, suivant l'axe longitudinal (Y), du moule et de l'ensemble formé par la garniture (5) et chaque insert (2, 1), éventuellement accompagné d'une rotation autour de cet axe (Y) et / ou d'une déformation élastique de la garniture (5).

## Claims

1. Hydroelastic joint having first and second axial ends (B, H) spaced apart from one another along a longitudinal axis (Y) and including, at an increasing radial distance from this axis, at least one internal frame (1), an intermediate frame (2) with a window or "cage", and an external sleeve (4), which joint also includes a elastomer packing (5) molded with at least one molding insert chosen from the assembly including the internal frame (1), the cage (2) and the external sleeve (4), in which said packing (5) at least partially forms a wall for at least two hydraulic fluid chambers (6) communicating with one another through at least one channel (30), **characterized in that** it also includes sealing means (3), **in that** the assembly formed by the packing (5) and each insert has at least an essentially axial molding reserve, and **in that** each chamber (6) and each channel (30) are defined inside the molding reserve and are sealed or delimited, at least in an axial direction, by the sealing means (3).

2. Hydroelastic joint according to claim 1, **characterized in that** the molding reserve and the sealing means (3) together delimit, in angular areas offset from one another about the longitudinal axis (Y) and in an alternating manner, at least two free spaces with larger volumes and two free spaces with smaller volumes, in which each larger-volume free space houses at least one of said chambers (6), and at least one smaller-volume free space houses said channel (30).

3. Hydroelastic joint according to either one of claims 1 and 2, **characterized in that** the molding reserve has, at the first axial end (B) of the joint, an opening (60) that is axially sealed by the sealing means (3).

4. Hydroelastic joint according to claim 3, **characterized in that** said opening (60) is annular.

5. Hydroelastic joint according to any one of the previous claims, **characterized in that** each chamber (6) has, at the second axial end (H) of the joint, a second axial end (6H) axially sealed by the packing.

6. Hydroelastic joint according to any one of the previous claims, **characterized in that** the sealing means (3) include a elastic deformation of the external sleeve, resulting from a radial swaging.

7. Hydroelastic joint according to any one of the previous claims combined with claim 3, **characterized in that** the sealing means (3) include an attached part, axially sunken into the molding reserve, which attached part (3) incudes at least one base (31) axially sealing the opening (60) of the molding reserve.

8. Hydroelastic joint according to claim 7, **characterized in that** the base (31) of the attached part (3) has a peripheral groove (312) into which the first axial end (2B) of the cage (2) is nested, and **in that** this base (31) forms a mechanical bridge between the first axial end (2B) of the cage (2) and a first end (1B, 4B) of the internal frame (1) and/or the external sleeve (4).

9. Hydroelastic joint according to any one of the previous claims combined with claim 7, **characterized in that** the base (31) of the attached part (3) has an internal edge (311) radially closer to the axis (Y) than the first axial end (2B) of the cage (2) and adapter to form a stop to limit the radial displacement of the internal frame (1) with respect to the sleeve (4).

10. Hydroelastic joint according to any one of the previous claims, **characterized in that** the cage (2) and the sleeve (4) or the cage (2) and the internal frame (1) are connected to one another by their second respective axial ends (2H, 4H; 2H, 1H) and thus form a single part.

11. Hydroelastic joint according to any one of the previous claims, **characterized in that** the packing (5) has at least one maximum pressure valve (53) enabling two chambers (6) to communicate with one another directly if there is excess pressure, and **in that** the attached part (3) has an axial rib (321) suitable for holding an edge (531) of a lip of said valve (53).

12. Hydroelastic joint according to any one of the previous claims, **characterized in that** at least one of the elements constituted by the internal frame (1), the cage (2), the sleeve (4) and the attached part (3) is made of a polymer material, preferably by molding.

13. Process for producing a Hydroelastic joint having first and second axial ends (B, H) spaced apart from one another along a longitudinal axis (Y), and including, at an increasing radial distance from this axis, at least one internal frame (1), an intermediate frame (2) with a window or "cage', and an external sleeve (4), which joint also includes an elastomer packing (5) molded with at least one molding insert chosen from the assembly including the internal frame (1), the cage (2) and the external sleeve (4), in which said packing (5) at least partially forms a wall for at least two hydraulic fluid chambers (6), **characterized in that** it includes an operation consisting of molding, in one operation, the packing (5) on the cage (2) and on the external sleeve (4) and/or on the internal frame (1).

14. Production process according to claim 13, **characterized in that** the mold removal operation is performed by relative distancing, according to the longitudinal axis (Y), of the mold and the assembly formed by the packing (5) and each insert (2, 1), optionally accompanied by a rotation about said axis (Y) and/or an elastic deformation of the packing (5).

## Patentansprüche

1. Hydroelastisches Gelenk, das ein erstes und ein zweites axiales Ende (B, H) aufweist, die entlang einer Längsachse (Y) voneinander beabstandet sind, und das in einem zunehmenden radialen Abstand von dieser Achse mindestens einen inneren Mantel (1), einen Zwischenmantel (2) mit Fenster oder einen "Käfig" und eine äußere Muffe (4) aufweist, wobei dieses Gelenk außerdem ein Futter (5) aus einem Elastomermaterial aufweist, das mit mindestens einem Formeinsatz geformt ist, der aus der Baugruppe ausgewählt ist, die den inneren Mantel (1), den Käfig (2) und die äußere Muffe (4) aufweist, wobei dieses Futter (5) zumindest teilweise eine Wand für mindestens zwei Hydraulikfluidkammern (6) bildet, die durch mindestens einen Kanal (30) miteinander in Verbindung stehen, **dadurch gekennzeichnet, dass** es außerdem Verschlussmittel (3) aufweist, dass die durch das Futter (5) und jeden Einsatz gebildete Baugruppe eine zumindest im Wesentlichen axiale Formreserve aufweist und dass jede Kammer (6) und jeder Kanal (30) im Inneren der Formreserve definiert sind und zumindest in einer axialen Richtung durch die Verschlussmittel (3) verschlossen oder begrenzt sind.

2. Hydroelastisches Gelenk nach Anspruch 1, **dadurch gekennzeichnet, dass** die Formreserve und die Verschlussmittel (3) in Winkelzonen, die um die Längsachse (Y) zueinander versetzt sind, gemeinsam und abwechselnd mindestens zwei obere freie Volumenräume und zwei untere freie Volumenräume begrenzen, wobei jeder obere freie Volumenraum mindestens eine der Kammern (6) beherbergt und mindestens ein unterer freier Volumenraum den Kanal (30) beherbergt.

3. Hydroelastisches Gelenk nach einem der Ansprüche 1 und 2, **dadurch gekennzeichnet, dass** die Formreserve am ersten axialen Ende (B) des Gelenks eine Öffnung (60) aufweist, die durch die Verschlussmittel (3) axial verschlossen ist.

4. Hydroelastisches Gelenk nach Anspruch 3, **dadurch gekennzeichnet, dass** die Öffnung (60) ringförmig ist.

5. Hydroelastisches Gelenk nach einem der vorangehenden Ansprüche, **dadurch gekennzeichnet, dass** jede Kammer (6) am zweiten axialen Ende (H) des Gelenks ein zweites axiales Ende (6H) aufweist, das durch das Futter (5) axial verschlossen ist.

6. Hydroelastisches Gelenk nach einem der vorangehenden Ansprüche, **dadurch gekennzeichnet, dass** die Verschlussmittel (3) eine plastische Verformung der äußeren Muffe aufweisen, die sich aus einer radialen Einschnürung ergibt.

7. Hydroelastisches Gelenk nach einem der vorangehenden Ansprüche in Kombination mit Anspruch 3, **dadurch gekennzeichnet, dass** die Verschlussmittel (3) ein angefügtes Teil aufweisen, das axial in die Formreserve eingedrückt ist, wobei dieses angefügte Teil (3) mindestens einen Sockel (31) aufweist, der die Öffnung (60) der Formreserve axial verschließt.

8. Hydroelastisches Gelenk nach Anspruch 7, **dadurch gekennzeichnet, dass** der Sockel (31) des angefügten Teils (3) eine Umfangsrille (312) aufweist, in die das erste axiale Ende (2B) des Käfigs (2) eingefügt ist, und dass dieser Sockel (31) eine mechanische Brücke zwischen dem ersten axialen Ende (2B) des Käfigs (2) und einem ersten Ende (1B, 4B) des inneren Mantels (1) und/oder der äußeren Muffe (4) bildet.

9. Hydroelastisches Gelenk nach einem der vorangehenden Ansprüche in Kombination mit Anspruch 7, **dadurch gekennzeichnet, dass** der Sockel (31) des angefügten Teils (3) einen inneren Rand (311) aufweist, der radial näher an der Achse (Y) liegt als das erste axiale Ende (2B) des Käfigs (2) und dazu ausgelegt ist, einen Anschlag zur Begrenzung der radialen Auslenkung des inneren Mantels (1) in Bezug auf die Muffe (4) zu bilden.

10. Hydroelastisches Gelenk nach einem der vorangehenden Ansprüche, **dadurch gekennzeichnet, dass** der Käfig (2) und die Muffe (4) oder der Käfig (2) und der innere Mantel (1) durch ihre jeweiligen zweiten axialen Enden (2H, 4H; 2H, 1H) miteinander verbunden sind und ein einziges Teil bilden.

11. Hydroelastisches Gelenk nach einem der vorangehenden Ansprüche, **dadurch gekennzeichnet, dass** das Futter (5) mindestens ein Überdruckventil (53) aufweiset, das dazu ausgelegt ist, zwei Kammern (6) im Fall eines überdrucks direkt miteinander in Verbindung zu bringen, und dass das angefügte Teil (3) eine axiale Rippe (321) trägt, die einen Rand (531) einer Lippe dieses Ventils (53) festhalten kann.

12. Hydroelastisches Gelenk nach einem der vorangehenden Anspruche, **dadurch gekennzeichnet, dass** mindestens eines der Elemente, die aus dem inneren Mantel (1), dem Käfig (2), der Muffe (4) und dem angefügten Teil (3) gebildet sind, aus einem Polymermaterial vorzugsweise durch Formen hergestellt ist.

13. Verfahren zur Herstellung eines hydroelastischen Gelenks, das ein erstes und ein zweites axiales Ende (B, H) aufweist, die entlang einer Längsachse (Y) voneinander beabstandet sind, und in einem zunehmenden radialen Abstand von dieser Achse mindestens einen inneren Mantel (1), einen Zwischenmantel (2) mit Fenster oder einen "Käfig" und eine äußere Muffe (4) aufweist, wobei dieses Gelenk außerdem ein Futter (5) aus einem Elastomermaterial aufweist, das mit mindestens einem Formeinsatz geformt wird, der aus der Baugruppe ausgewählt ist, die den inneren Mantel (1), den Käfig (2) und die äußere Muffe (4) aufweist, wobei dieses Futter (5) zumindest teilweise eine Wand für mindestens zwei Hydraulikfluidkammern (6) bildet, **dadurch gekennzeichnet, dass** es einen Vorgang aufweist, der darin besteht, das Futter (5) in einem Vorgang an den Käfig (2) und an die äußere Muffe (4) und/oder an den innere Mantel (1) anzuformen,

14. Herstellungsverfahren nach Anspruch 13, **dadurch gekennzeichnet, dass** der Formentnahmevorgang durch relative Entfernung der Form und der Baugruppe, die aus dem Futter (5) und jedem Einsatz (2, 1) gebildet ist, entlang der Längsachse (Y), eventuell begleitet von einer Drehung um diese Achse (Y) und/oder einer elastischen Verformung des Futters (5), ausgeführt wird.
